# EUROPEAN PATENT APPLICATION

(11) **EP 3 428 596 A1**
(43) Date of publication of application: **16.01.2019**
(21) Application number: 17763427.6
(22) Date of filing: 10.03.2017
(51) Int. Cl.: G01L 1/22

(54) **SENSOR MODULE AND SHEET MODULE**

(30) Priority: 11.03.2016 JP 2016048299
(71) Applicant: Dai Nippon Printing Co., Ltd., Tokyo 162-8001 (JP)
(72) Inventor: TOGASHI Kazuyoshi, Tokyo 162-8001 (JP); OHIGASHI Ryoichi, Tokyo 162-8001 (JP); YONEKAWA Tsukasa, Tokyo 162-8001 (JP)
(74) Representative: Müller-Boré & Partner Patentanwälte PartG mbB
(86) International application number: PCT/JP2017/009737
(87) International publication number: WO 2017/155095

(57) **Abstract**

A sensor module is provided in which a sensor which can be more easily attached to a structure than conventionally and can also suppress variation in attachment quality. The sensor module includes an elastic layer, a sensor arranged above at last one part of the elastic layer and configured to detect a physical quantity related to the properties of a structure, and a film layer arranged above the elastic layer and attached with the sensor.

## Description

### Technical Field

The present disclosure is related to a sensor module arranged with a sensor and the like which detects a physical quantity related to the properties of a structure and a sheet module arranged with this.

### Background Art

Appropriate maintenance management is required for aging structures which form social capital such as roads, railroads, ports, dams and buildings and the like. For example, since peeling of the outer concrete walls and the like in bridges, tunnels, slopes in automobile roads and railroads are a cause of large accidents, periodic checks and inspections are carried out, and repair work in necessary places is carried out as appropriate.

Periodic inspections of structures and the like have conventionally been performed by attaching a sensor to the structure. PLT 1 discloses a technique in which a crack detector (sensor) is formed on the surface of a steel structure by spraying or the like.

### Citation List

### Patent Literature

PLT 1: Japanese Laid Open Patent Publication No. 2008-191169

### Summary of Invention

### Technical Problem

However, since the sensor module described in PLT 1 is constructed on-site, there is a possibility of variation in adhesion quality to the structure due to unevenness such as adhesion thickness and entanglement of air bubbles and the like.

In view of the above circumstances, an object of the present disclosure is to provide a sensor module with a sensor which can be easily attached to a structure and which can suppress variations in attachment quality more than the related art.

### Solution to Problems

A sensor module according to an embodiment of the present disclosure includes an elastic layer and a sensor arranged on above at least one part of the elastic layer and configured to detect a physical quantity related to the properties of a structure, and a film layer arranged above the elastic layer and attached with the sensor.

### Advantageous Effects of Invention

According to the present disclosure, a sensor can be easily attached to a structure as compared with the related art, and variations in attachment quality are suppressed.

### Brief Description of Drawings

Figure 1A is a cross-sectional view of a sensor module according to a first embodiment of the present disclosure;
Figure 1B is a cross-sectional view showing a state in which the sensor module according to the first embodiment of the present disclosure is fixed to a structure;
Figure 2 is a plan view of a sensor, wiring and a terminal;
Figure 3A is a cross-sectional view of a sensor module according to a second embodiment;
Figure 3B is a cross-sectional view showing a state in which the sensor module according to the second embodiment is fixed to a structure;
Figure 4A is a cross-sectional view of a sensor module according to another example of the second embodiment;
Figure 4B is a cross-sectional view showing a state in which the sensor module of Figure 4A is fixed to a structure;
Figure 5A is a cross-sectional view of a sensor module according to a third embodiment;
Figure 5B is a cross-sectional view showing a state in which the sensor module of Figure 5A is fixed to a structure;
Figure 6A is a cross-sectional view of a sensor module according to another example of the third embodiment;
Figure 6B is a cross-sectional view showing a state in which the sensor module of Figure 6A is fixed to a structure;
Figure 7 is a cross-sectional view of a sensor module according to a fourth embodiment;
Figure 8 is a plan view of the sensor module of Figure 7 as seen from a peeling film side;
Figure 9 is a plan view of a sensor module according to a modified example 2 of the fourth embodiment as seen from a peeling film side;
Figure 10 is a cross-sectional view of a sensor module according to a fifth embodiment;
Figure 11 is a view of the sensor module of Figure 10 as seen from a second surface side of the film layer in Figure 10;
Figure 12 is a cross-sectional view of a sensor module according to a modification example 1 of the fifth embodiment;
Figure 13 is a cross-sectional view of a sensor module according to a modification example 2 of the fifth embodiment;
Figure 14 is a cross-sectional view of a sensor module according to a sixth embodiment; and
Figure 15 is a plan view of a sheet module.

### Description of Embodiments

The embodiments of the present disclosure are explained below while referring to the drawings and the like. However, the present disclosure can be implemented in many different aspects and is not to be interpreted as being limited to the description of the embodiments exemplified herein. In addition, in order to make the explanation clearer, although the drawings may be schematically represented in terms of the width, thickness, shape and the like of each part as compared with their actual form, they are only an example, and the interpretation of the present disclosure is not limited. In addition, in the present specification and each figure, the same reference numerals are given to the same elements as those described previously with reference to the previous figures, and a detailed explanation may be omitted as appropriate. In addition, for the purposes of explanation, although an explanation is given using the terms "upward" or "downward", the upward and downward directions may also be reversed.

In the present specification, when a certain member or region is referred to as being "above (or below)" another member or region, unless there is a specific limitation, this means not only that a part or region is directly above (or directly below) a certain part or region, but also includes the case where it is located above (or below) another member or region, that is, another component is may be included between another member or region.

### First Embodiment

### 1-1. Structure of Electronic Component Module 1

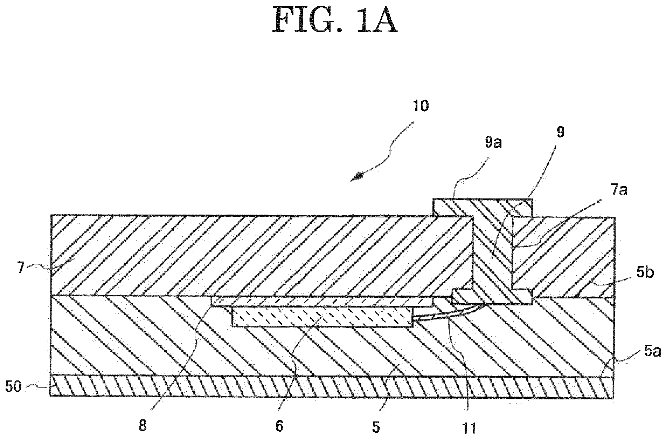

Figure 1A is a cross-sectional view of a sensor module 10 according to a first embodiment of the present disclosure. The sensor module 10 includes an elastic layer 5, a sensor 6, and a film layer 7.

In the present embodiment, the sensor 6 is arranged below the film layer 7 (first surface side), and the elastic layer 5 is arranged below the sensor 6. By arranging the sensor 6 below the film layer 7, the sensor 6 is protected and by arranging the elastic layer 5 below the sensor 6, the sensor 6 can be easily attached to a structure 100. Each of the constituent elements of the sensor module 10 are described in detail below in the order of the film layer 7, the elastic layer 5 and the sensor 6.

### 1-1-1. Film Layer

The film layer 7 can be bent, can take the form of being spread out in a plane and can also have a curved shape. Any color can be used for the film layer 7. Furthermore, in the case where a transparent material is used as the film layer 7 for example, by attaching the film layer 7 to the structure 100 by the elastic layer 5, when cracks occur in the structure 100, there is an advantage whereby it is possible for a user to easily confirm the state of the crack of the structure 100. Here, the film layer 7 is arranged above the entire surface of the elastic layer 5 described later. Furthermore, the elastic layer 5 may also be arranged on a part of the rear surface of the film layer 7.

Although any material may be used for the film layer 7, in the present embodiment, for example, polyethylene naphthalate, polyethylene terephthalate, epoxy, polyimide and a liquid crystal polymer and the like can be applied.

In addition, the film layer 7 may have a function of protecting the sensor 6 from water vapor or ultraviolet (UV) radiation. Furthermore, a hole 7a may be formed in the thickness direction of the film layer 7, wiring 9 connected to a wire 11 which is connected to the sensor 6 described later may be arranged in the hole 7a, and a terminal 9a of the wiring 9 may be formed to be exposed from the hole 7a.

### 1-1-2. Elastic layer

The elastic layer 5 may be a layer having any property among a tacky adhesive layer having both tackiness and adhesiveness, a tackiness layer having tackiness, and an adhesive layer having adhesiveness. The sensor module 10 can be easily attached to the structure 100 due to the elastic layer 5 having such properties. It should be noted that the above mentioned tackiness means a temporary adhesion phenomenon such as stickiness expressed as tack and the like, adhesiveness means semi-permanent adhesion phenomenon, tackiness and adhesion may be distinguished.

The material of the elastic layer 5 may include, for example, an acrylic resin or an epoxy resin. In addition, the material of the elastic layer 5 may include a latent curing agent, a curing catalyst which generates a base by irradiation with ultraviolet rays or electron rays and a curing agent having a mercapto group, and a curing agent having a phenolic hydroxyl group. Therefore, it can be said that the elastic layer 5 may be a layer that cures when exposes to air and with the passage of time, a layer having photocurability, a layer which cures at room temperature or a layer having a thermosetting property.

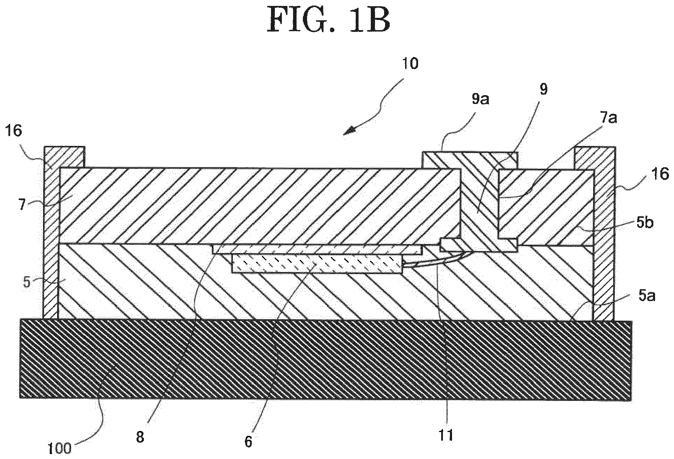

The elastic layer 5 is in an adhesive state when it is attached to the structure 100 (see Figure 1B). In addition, the elastic layer 5 is in a cured state after being affixed to the structure 100. Although the sensor module 10 is in a tacky state when attached to the structure 100, the elastic layer 5 is transferred to a cured state by heating, light irradiation (ultraviolet light wavelengths are preferred) or electron beam irradiation and the like, and the sensor module 10 is fixed to the structure 100.

For example, when constructing, the elastic layer 5 is irradiated with light through a peeling film 50, and a curing reaction of the elastic layer 5 is started. As curing progresses slowly from the light irradiation, tackiness is maintained for several hours. After the light irradiation, the peeling film 50 arranged on one surface 5a of the elastic layer 5 is rapidly peeled off, and the elastic layer 5 is attached to the structure 100. Although an example is given in which heating is also applied to the elastic layer 5, the elastic layer 5 may also have a structure in which it gradually cures under room temperature. When the elastic layer 5 is cured, the sensor module 10 may be pressed against the structure 100.

The elastic layer 5 has a different elastic modulus before curing and after curing. Specifically, in a temperature range of 0°C to 40°C, when it is not attached to the structure 100, that is, before curing, it is 0.01 MPa or more and less than 1000 MPa. On the other hand, when it is attached to the structure 100, that is, after curing, it is 1.0 GPa or more and less than 10 GPa.

The elastic layer 5 can be bent together with the film layer 7, can take a form in which it spreads out in a plane and can also take a curved form. The thickness of the elastic layer 5 may be 50 µm to 500 µm and preferably 100 µm to 250 µm. As long as the thickness of the elastic layer 5 is within this range, the elastic layer 5 has sufficient tackiness strength for attaching the sensor module 10 to the structure 100, and furthermore, after it is possible to provide it with a high adhesive strength after curing by heating or light irradiation or the like.

In the case when the thickness of the elastic layer 5 is less than 50 µm, the elastic layer 5 becomes thin and the adhesive strength and tackiness strength may be insufficient. On the other hand, if the thickness of the elastic layer 5 exceeds 500 µm, curing after heating or light irradiation or the like to the elastic layer 5 may not proceed sufficiently or the curing time may be lengthened. In addition, it is preferred that the elastic layer 5 has a variation within ±10 µm of the range of the thickness described above. Since the thickness of the elastic layer 5 is made uniform, variations in the attachment state of the sensor module 10 to the structure 100 are reduced.

Before the elastic layer 5 is attached to the structure 100, the peeling layer 50 is attached to one surface 5a (rear surface) of the elastic layer 5, and the film layer 7 is attached to the other surface 5b (front surface). Since the adhesive strength between the other side 5b and the film layer 7 and the adhesive strength between the one side 5a and the peeling film 50 is weaker than the adhesive strength between the one side 5a and the release film 50, even if the peeling film 50 is peeled off, the elastic layer 5 remains attached to the film layer 7. The peeling film 50 is peeled off from the elastic layer 5 before the sensor module 10 is attached to the structure 100. After the peeling film 50 is peeled off, the sensor module 10 can be easily attached to the structure 100 and used.

### 1-1-3. Sensor

The sensor 6 is arranged above a part of the elastic layer 5 described previously. In the manufacturing process, the adhesive layer 8 is formed on the lower surface of the film layer 7, and the sensor 6 is attached to the lower surface of the adhesive layer 8. In addition, the elastic layer 5 is formed from below this structure. The peeling film 50 is formed from below the elastic layer 5.

The sensor 6 detects a physical quantity related to the property of the structure 100 (see Figure 1B). Although the sensor 6 may be arranged above at least a part of the surface of the elastic layer 5, it may also be arranged above the entire surface of the elastic layer 5.

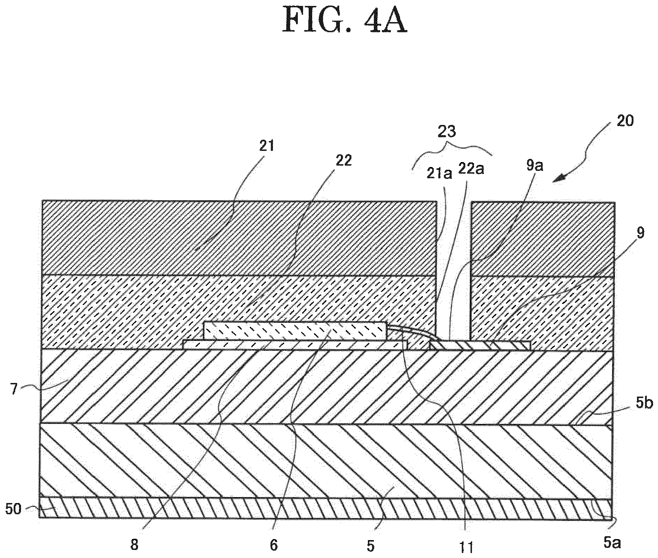

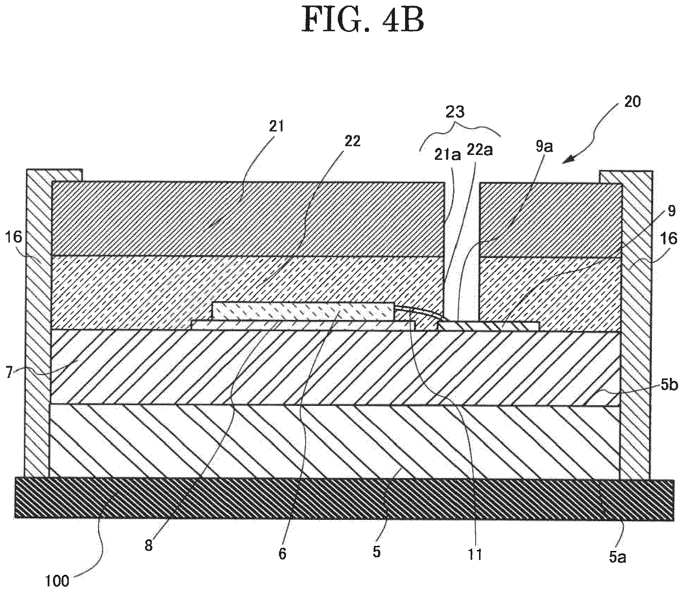

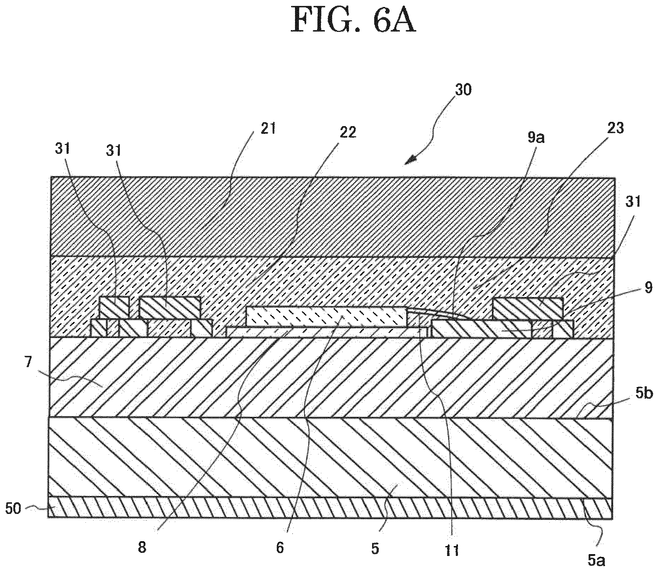

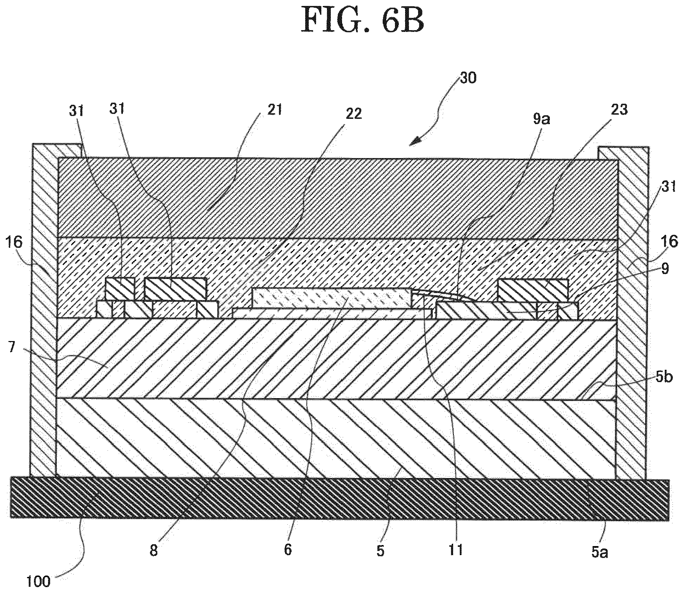

The adhesive layer 8 is formed above the sensor 6, and the film layer 7 is formed above the adhesive layer 8. For this reason, the sensor 6 is arranged below the film layer 7, and the sensor 6 is attached to the lower surface of the film layer 7 by the adhesive layer 8. By adopting this structure, the sensor 6 is protected by the film layer 7. Furthermore, the sensor 6 may be arranged above the film layer 7 (this is described later while referring to Figure 4 and Figure 6). Elements which form the sensor module 10 are described in detail below.

Although type of the sensor 6 is not be particularly specified, in the present embodiment, for example, a strain sensor for measuring the strain of the structure 100 is used. In addition, an acceleration sensor, a heat sensor, a greenhouse sensor, an AE (acoustic emission), a sound sensor, a surface acoustic wave sensor, an ultrasonic sensor and a GPS (Global Position System) sensor, a distance sensor) and the like may be used as the sensor 6. In addition, the sensors described above may be used alone, two or more of them may be used appropriately in combination or all of them may be used. In addition, a plurality of sensors of one kind may be used. It is possible to monitor any changes in distortion, vibration, heat, environmental sound, crack or position and the like of the structure 100 using any one of these sensors.

Figure 1B is a cross-sectional view showing a state in which the sensor module 10 of Figure 1A is attached to the structure 100. As is shown in Figure 1B, the sensor module 10 is fixed to the structure 100 by the elastic layer 5. In addition, when the sensor module 10 is attached to the structure 100, a second weather resistant layer 16 may be arranged on the side surface of the elastic layer 5 and the film layer 7. The second weather resistant layer 16 also has weather resistance and has a function for protecting the structure covered by the second weather resistant layer 16 from the external environment. In particular, the second weather resistant layer 16 is arranged to protect the edge of the sensor module 10 after attaching the sensor module 10 to the structure 100. In addition, the second weather resistant layer 16 may cover across to the surface of the film layer 7. An acrylic resin, an acrylic modified silicone resin, an RTV (Room Temperature Vulcanizing) rubber, an epoxy resin or a urethane resin in which polysiloxane nanoparticles and a UV absorber are dispersed at high density are used as the second weather resistant layer 16.

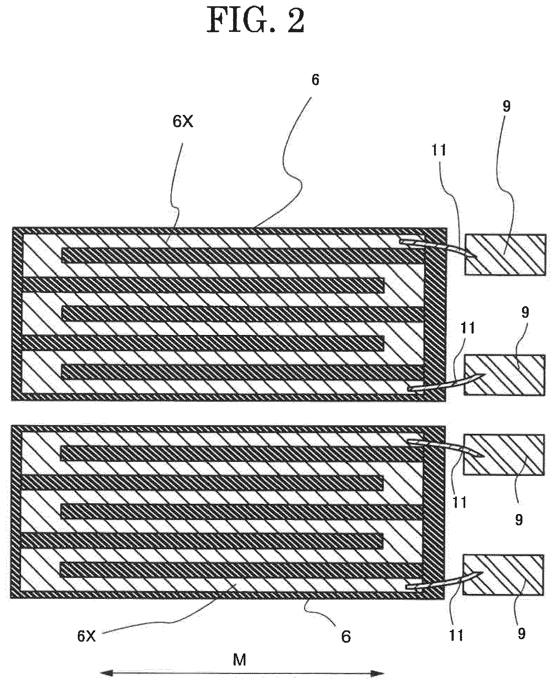

Figure 2 is a plan view of the sensor 6, a wire 11 and the wiring 9. The sensor 6 includes a metal resistor pattern 6X. The wire 11 and wiring 9 are connected in order to the metal resistor pattern 6X. For example, when the tensile force in the direction of the arrow M acts on the structure 100 and deforms in an extension direction, the metal resistor pattern 6X extends in the direction of the arrow M. Since the length of the resistor becomes longer and the cross-sectional area decreases when the pattern expands, the resistance value increases. Deformation of the structure 100 is detected by this type of change in the resistance value.

### 1-1-4. Other Structures

Returning to the explanation of Figure 1, the sensor 6 and the wiring 9 are connected by the wire 11. In addition, the sensor 6 includes a data processing unit (not shown in the diagram) for processing detection information from the sensor 6, and may also include a structure for wirelessly outputting measurement data output from the data processing part to an external device. In addition, a power supply unit including a vibration generating element, a solar cell, a storage battery and a power supply controller may also be arranged. By adopting such a structure, it is also possible to configure the sensor module 10 to generate electric power by itself, wirelessly transmit information, and externally acquire information of the structure 100.

### Second Embodiment

### 2-1. Structure of Electronic Component Module 2

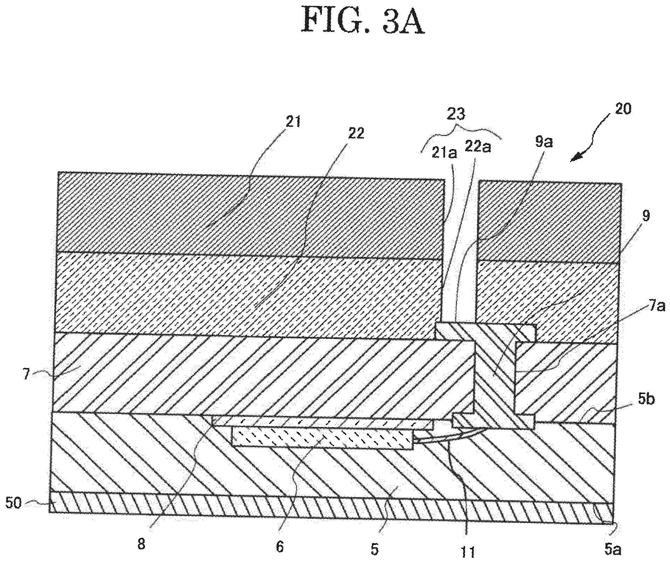

Figure 3A is a cross-sectional view of a sensor module 20 according to a second embodiment. The structure of the second embodiment is different from the structure of the first embodiment in that the sensor module 20 is further arranged with a first weather resistant layer 21 and a sealing material layer 22.

### 2-1-1. First weather resistant layer

The first weather resistant layer 21 (also called a weather resistant cover layer) is arranged above the film layer 7 (above the sealing material layer 22 above the film layer 7) and covers the film layer 7. The first weather resistant layer 21 is formed from a material having weather resistance and has a function for protecting the coverage of the first weather resistant layer 21 from the external environment. The first weather resistant layer 21 may be formed by a multilayer structure such as polyethylene terephthalate and a fluorine film or the like.

The first weather resistance layer 21 may have a water vapor barrier layer or a UV cut layer. A water vapor barrier layer may be manufactured by, for example, forming a SiOₓ layer above a polyethylene terephthalate layer. The UV cut layer may be formed by applying, for example, an acrylic resin layer in which polysiloxane nanoparticles and a UV absorber are dispersed at a high density, and may be formed on the outermost surface of the first weather resistant layer 21.

### 2-1-2. Sealing Material Layer

The sealing material layer 22 is arranged between the film layer 7 and the first weather resistant layer 21. The sealing material layer 22 partially seals the wiring 9 within the hole 7a of the film layer 7. In addition, the sealing material layer 22 functions as an adhesive for bonding the first weather resistant layer 21 and the film layer 7 together. Underfill materials for BGA packages or bare chips which are generally used in the semiconductor field can be used for the sealing material layer 22, and may also be formed using acrylic modified silicone resins, RTV (Room Temperature Vulcanizing) rubbers, olefin resins, Eva, hot melt type epoxy resins (thermosetting resin) or the like.

A hole 21a is formed in the thickness direction of the first weather resistant layer 21, and a hole 22a is formed in the thickness direction of the sealing material layer 22, and these holes 21a and 22a form a hole 23. The terminal 9a faces the region of the hole 23, and the terminal 9a is exposed from the hole 23. The sensor 6 may be protected by burying the hole 23 with solder or the like.

### 2-2. Structure of Electronic Component Module 3

### 2-2-1. Second Weather Resistance Layer

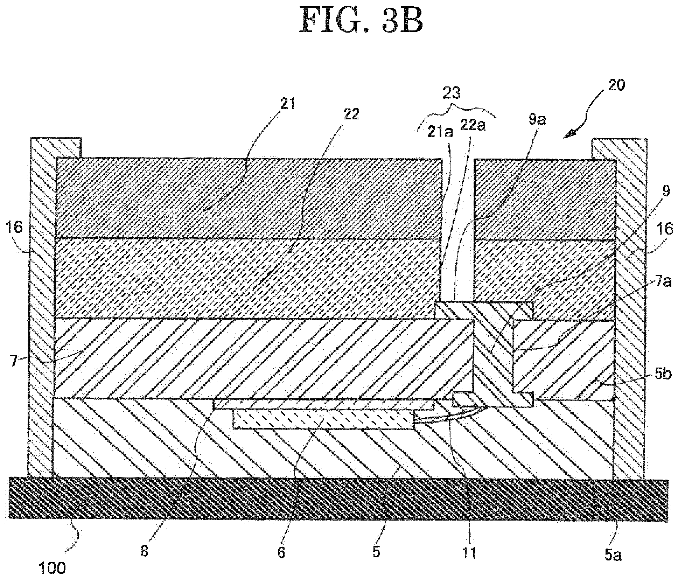

Figure 3B is a cross-sectional view showing a state where the sensor module 20 of Figure 3A is attached to the structure 100. As is shown in Figure 3B, the sensor module 20 is fixed to the structure 100 by the elastic layer 5. In addition, when the sensor module 20 is attached to the structure 100, the second weather resistant layer 16 (also called a weather resistant resin layer) may be arranged the elastic layer 5, the film layer 7 and a side surface of the first sealing material layer 21 and covered them. This second weather resistant layer 16 may covered across to the surface of the first weather resistant layer 21.

The second weather resistant layer 16 also has weather resistance and has a function for protecting the structure covered by the second weather resistant layer 16 from the external environment. In particular, the second weather resistant layer 16 is arranged to protect the edge of the sensor module 10 after attaching the sensor module 10 to the structure 100.

Furthermore, as is shown in Figure 4A, the sensor 6 may be attached to the film layer 7 by the adhesive layer 8. Here, the upper part of the sensor 6 is further covered and protected by the sealing material layer 22 and the first weather resistant layer 21. In addition, in the case of this structure, as is shown in Figure 4B, when the sensor module 20 is fixed to the structure 100, the second weather resistant layer 16 may be arranged to cover the elastic layer 5, the film layer 7, the sealing layer 22 and the side surface of the first weather resistant layer 21. The second weather resistant layer 16 may also covered across to the surface of the first weather resistant layer 21.

### Third Embodiment

### 3-1. Structure of Electronic Component Module 4

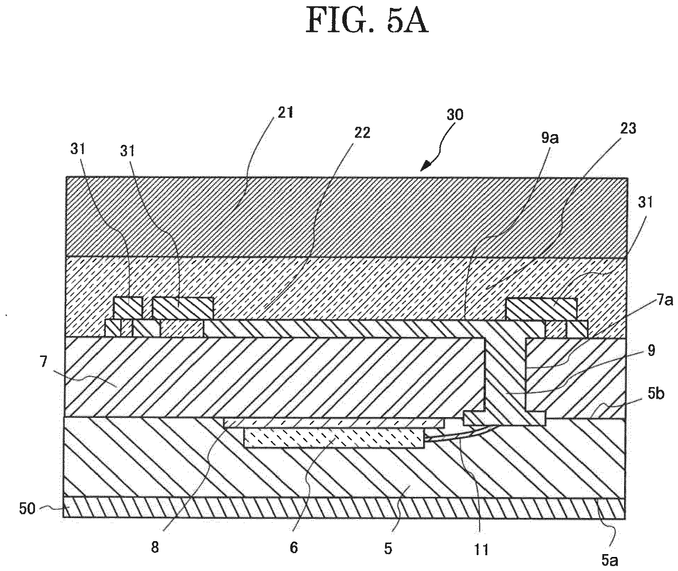

Figure 5A is a cross-sectional view of a sensor module 30 according to a third embodiment. The sealing material layer 22 is arranged between the film layer 7 and the first weather resistant layer 21, and the wiring 9 is arranged inside the sealing layer 22 to seal the wiring 9. In addition, the sensor module 30 is arranged with an electronic component 31 arranged on the inside of the sealing material layer 22. The electronic component 31 includes at least one of an amplifier, an integrated circuit, a transmitter and a battery. By adopting such a structure, it is possible to independently generate power and perform wireless transmission, and information related to the state of the structure 100 can be sent to the exterior.

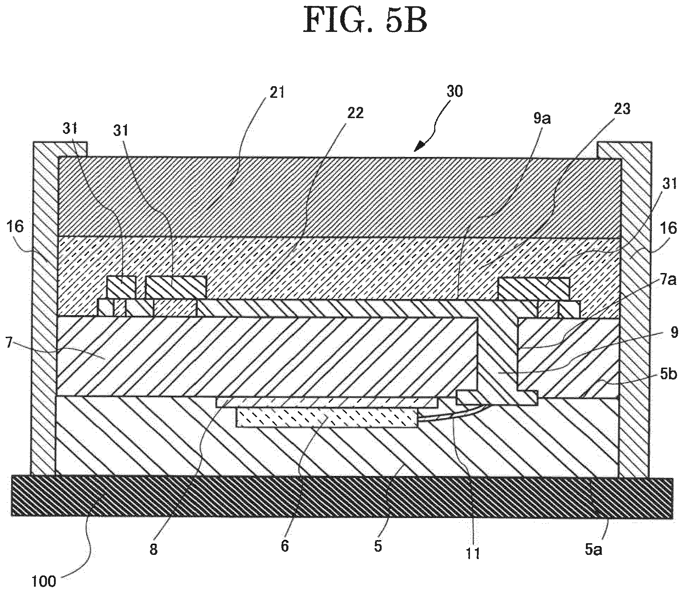

In addition, in this case as well, as is shown in Figure 5B, when the sensor module 30 is fixed to the structure 100, the second weather resistant layer 16 is arranged to cover the elastic layer 5, the film layer 7, the sealing material layer 22, and the side surface of the first weather resistant layer 21. The second weather resistant layer 16 may also cover across to the surface of the first weather resistant layer 21.

### 3-2. Structure of Electronic Component Module 5

Furthermore, as is shown in Figure 6A, the sensor 6 may be attached to the top of the film layer 7 using the adhesive layer 8. Here, the upper part of the sensor 6 is covered and protected by the sealing material layer 22 and the first weather resistant layer 21.

In addition, in this case as well, as is shown in Figure 6B, when the sensor module 30 is fixed to the structure 100, the second weather resistant layer 16 may be arranged the elastic layer 5, the film layer 7, the sealing material layer 22, and the side surface of the first weather resistant layer 21. The second weather resistant layer 16 may also cover across to the surface of the first weather resistant layer 21.

According to the sensor modules 10, 20 and 30 of any one of the first to third embodiments, the sensor 6 can be easily attached to the structure 100 and it is possible to suppress variations in the attachment quality as compared with the prior art. In addition, the durability of the sensor 6 is improved. In addition, in particular, by improving the durability of the sensor 6 against direct sunlight and moisture, the attachment precision of the sensor 6 is improved reproducibility of detection is improved.

### Fourth Embodiment

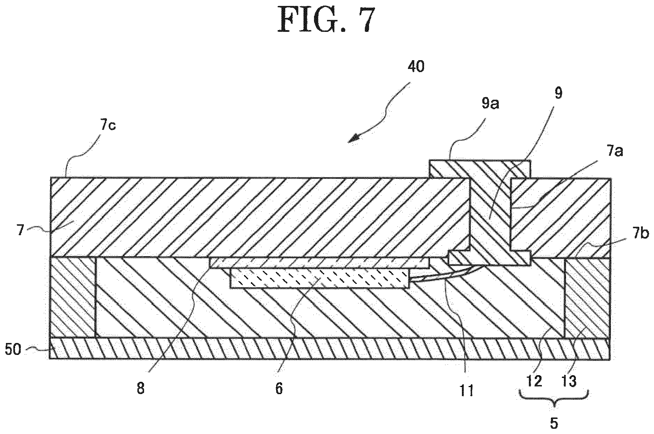

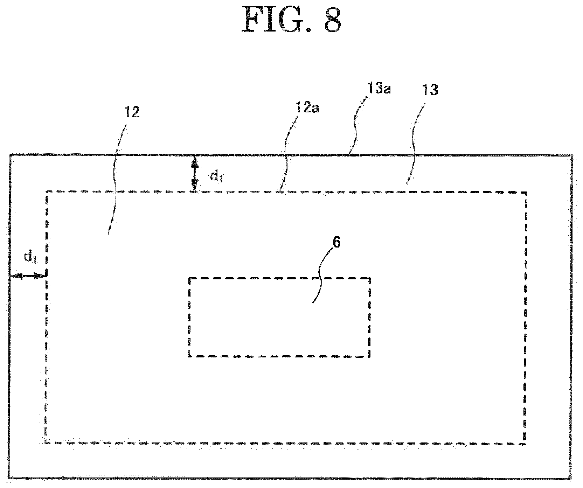

A sensor module 40 according to a fourth embodiment is explained using Figure 7 and Figure 8. Figure 7 is a cross-sectional view of a sensor module according to a fourth embodiment. Figure 8 is a plan view of the sensor module of Figure 7 as seen from the peeling film side. The sensor module 40 according to the present embodiment is substantially the same as the sensor module 10 (see Figure 1A) according to the first embodiment. Therefore, a detailed explanation of overlapping parts is omitted and only parts which are different are explained in detail.

The sensor module 40 according to the fourth embodiment is different from the sensor module 10 shown in Figure 1A in terms of the elastic layer 5. That is, the elastic layer 5 of the sensor module 40 includes a first tacky adhesive layer 12 having tackiness and adhesiveness and a second tacky adhesive layer 12 arranged in the periphery of the first tacky adhesive layer 12. As is shown in Figure 8, the long side of the second tacky adhesive layer 13 and the long side of the first tacky adhesive layer 12 are separated by a predetermined distance d1. In other words, an end part 13a of the second tacky adhesive layer 13 and a periphery edge 12a of the first tacky adhesive layer 12 are separated by a predetermined distance d1. Similarly, the short side of the second tacky adhesive layer 13 and the short side of the first tacky adhesive layer 12 are separated by a predetermined distance d1. The predetermined distance d1 is 3 mm or more. More preferably, the predetermined distance d1 is 5 mm or more.

The second tacky adhesive layer 13 has stronger adhesion than the first tacky adhesive layer 12. Specifically, the adhesive strength of the second tacky adhesive layer 13 is 4 (N / 10 mm) or more, 9 (N / 10 mm) or more is desirable. The material of the first tacky adhesive layer 12 includes, for example, an acrylic resin or an epoxy resin. Therefore, the material of the second tacky adhesive layer 13 is an acrylic resin, epoxy resin or butyl rubber. Furthermore, the second tacky adhesive layer 13 may be a material having only adhesion and is not cured.

Similar to the first to third embodiments, the film layer 7 has one surface (first surface) 7b and a second surface 7c which is a surface on the opposite side to the first surface. In this example, as is shown in Figure 7, the sensor 6 is arranged on the first surface side of the film layer 7. In addition, as is shown in Figure 7 and Figure 8, the sensor 6 is arranged between the film layer 7 and the first tacky adhesive layer 12.

The same advantageous effect as in the first embodiment can also be obtained in the present embodiment.

Warpage may occur in the film layer 7 due to the manufacturing process or the characteristics (for example, molecular orientation) of the film layer 7 itself at a position of about 3 mm to 10 mm from an end part thereof. As a result, when the sensor module 40 according to the present embodiment is fixed to the structure 100, the end part may float and easily peel off. In the sensor module 40 according to the present embodiment, the second tacky adhesive layer 13 having stronger adhesion than the first tacky adhesive layer 12 is arranged disposed on the periphery of the first tacky adhesive layer 12. In addition, a distance d1 from an end part 13a of the second tacky adhesive layer 13 to the periphery edge 12a of the first tacky adhesive layer 12 is about 5 mm. By arranging the second tacky adhesive layer 13 having a strong adhesive force on the outer periphery of the sensor module, it is possible to suppress the occurrence of floating of the end part of the sensor due to the warping.

### Modified Example 1

In the explanation of the sensor module 40 according to the fourth embodiment above, the elastic layer 5 of the sensor module 10 of Figure 1A of the first embodiment was explained on the premise that it was made to be the first tacky adhesive layer 12 and the second tacky adhesive layer 13. Similarly, the elastic layer 5 of the first embodiment (Figure 1B), the elastic layer 5 of the second embodiment (Figure 3A, Figure 3B, Figure 4A and Figure 4B), the elastic layer 5 of the third embodiment (Figure 5A, Figure 5B, Figure 6A and Figure 6B) may be used as the first tacky adhesive layer 12 and the second tacky adhesive layer 13. In these modified examples as well, it is possible to suppress warping of the film layer 7 in addition to the advantageous effects of the respective embodiments.

### Modified Example 2

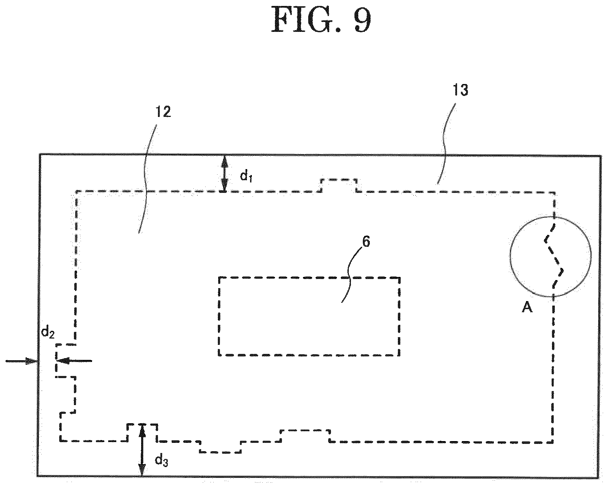

In the fourth embodiment and the second modified example described above, the distance from the end part 13a of the second tacky adhesive layer 13 to the periphery edge 12a of the first tacky adhesive layer 12 is explained on the premise that it is equidistant at d1 as is shown in Figure 8. However, the distance from the end part 13a of the second tacky adhesive layer 13 to the periphery edge 12a of the first tacky adhesive layer 12 may not be equidistant as long as warping of the film layer 7 can be suppressed. Here, Figure 9 is a plan view of the sensor module according to the modified example 2 of the fourth embodiment as seen from the peeling film side. As is shown in Figure 9, the distance between the end part 13a of the second tacky adhesive layer 13 and the periphery edge 12a of the first tacky adhesive layer 12 may be a section d2 which is shorter than d1 or a section d3 which is longer than d1. In other words, in the top surface view as shown in Figure 9, the first tacky adhesive layer 12 and the second tacky adhesive layer 13 may have protrusion parts or recess parts. In addition, as shown by the region A, the boundary between the first tacky adhesive layer 12 and the second tacky adhesive layer 13 may be formed in a bent zigzag shape. In these modified examples, it is possible to suppress warping occurring in the film layer 7 in addition to the advantageous effects of the respective embodiments.

### Fifth Embodiment

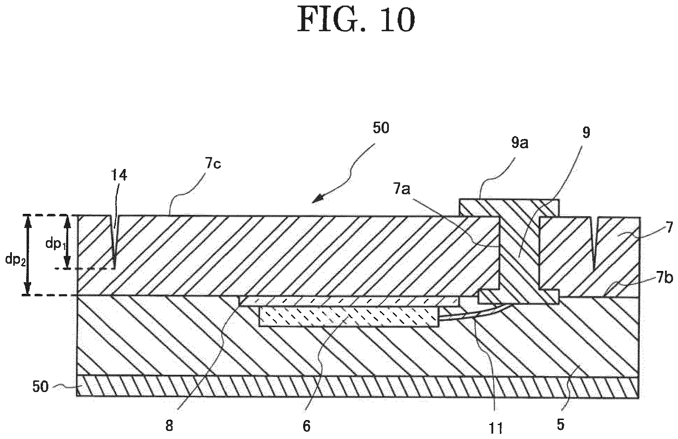

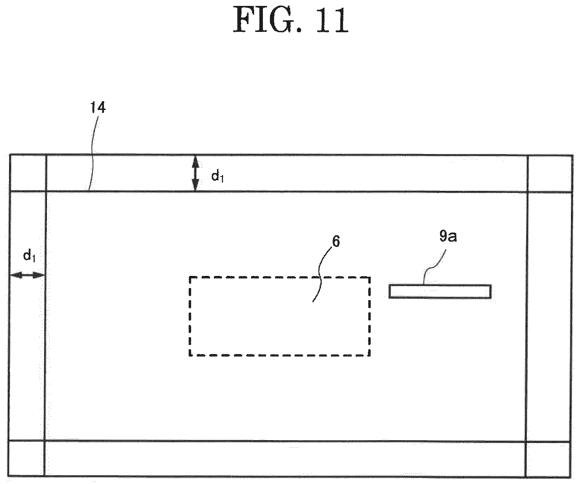

A sensor module 50 according to a fifth embodiment is explained using Figure 10 and Figure 11. Figure 10 is a cross-sectional view of the sensor module according to the fifth embodiment. This is a view of the sensor module of Figure 10 as see from the second surface side of the film layer. The sensor module 50 according to the present embodiment is substantially the same as the sensor module 10 (see Figure 1A) according to the first embodiment. Therefore, a detailed explanation of overlapping parts is omitted and only parts which are different are explained in detail.

The sensor module 50 according to the fifth embodiment is different from the sensor module 10 shown in Figure 1A in terms of the film layer 7. That is, a first notch part 14 is arranged on the second surface 7c of the film layer 7 of the sensor module 50. As is shown in Figure 11, the first notch part 14 is arranged at a predetermined distance d1 from the end part of the film layer 7.

The first notch part 14 is arranged further on the first surface 7b side of the film layer 7 than the center of the film layer 7 in the thickness direction of the film layer 7 from the second surface 7c of the film layer 7. In other words, in the relationship between a depth dp1 of the first notch part 14 shown in Figure 10 and a thickness dp2 of the film layer 7, the relationship which is formed is "dp1>dp2/2". Furthermore, the first notch part 14 can be formed by cutting the second surface 7c of the film layer 7 with a sharp object such as a cutter.

The same advantageous effect as in the first embodiment can also be obtained in the present embodiment.

The film layer 7 begins to warp from a distance of d1 from the end part of the film layer 7. Therefore, by arranging the first notch part 14 at a predetermined distance d1 from the end part of the film layer 7, it is possible to suppress the occurrence of warpage.

In the above explanation, an explanation was given on the assumption that the first notch part 14 is arranged in the film layer 7 of the sensor module 10 shown in Figure 1A. However, similarly to this, the first notch part 14 may also be arranged in the film layer 7 of the sensor module 10 shown in Figure 1B.

### Modified Example 1

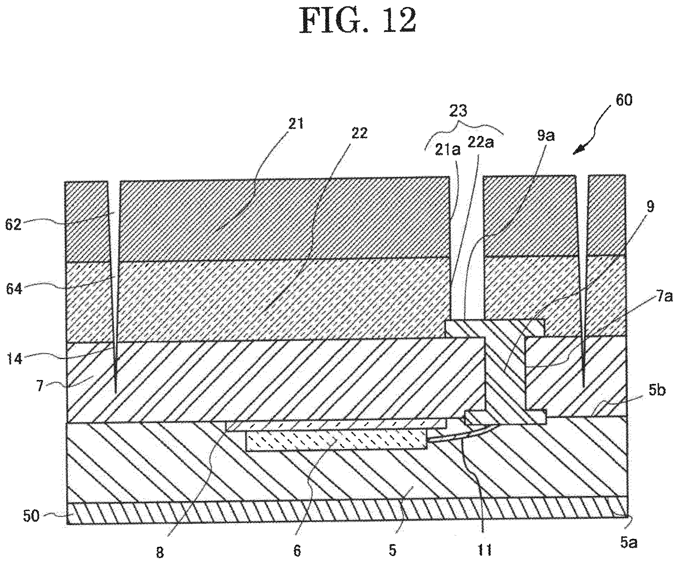

A sensor module 60 according to a modified example of the fifth embodiment is explained using Figure 12. Figure 12 is a cross-sectional view of a sensor module according to a first modified example of the fifth embodiment. The sensor module 60 is substantially the same as the sensor module 20 (see Figure 3A) of the second embodiment. Therefore, a detailed explanation of overlapping parts is omitted and only parts which are different are explained in detail. In addition, the point that the first notch part 14 is arranged in the film layer 7 of the sensor module 60 is the same as that of the sensor module 50 of the fifth embodiment. Therefore, a detailed explanation with regards to the first notch 14 is omitted here.

The first weather resistant layer 21 is arranged with a second notch 62 which passes through the first weather resistant layer 21 in the thickness direction. Similarly, a third notch part 64 which passes through the sealing material layer 22 is arranged in in the thickness direction in the sealing material layer 22. The second notch part 62 is arranged at a predetermined distance d1 from the end part of the first weather resistant layer 21. Similarly, the third notch part 64 is arranged at a predetermined distance d1 from the end part of the sealing material layer 22. That is, it can be said that the third notch part 64 is connected to the first notch part 14 and the second notch part 62.

The same advantageous effects as those of the second embodiment can also be obtained in the present modified example.

As described above, the film layer 7 begins to warp from a distance d1 from the end part of the film layer 7. In addition, the sealing material layer 22 and the first weather resistant layer 21 arranged on the second surface side of the film layer 7 will be warp together with warping of the film layer 7. Therefore, by respectively arranging the first notch part 14, the second notch part 62 and the third notch part 64 at the positions described above, it is possible to suppress the occurrence of warping in the film layer 7, the first weather resistant layer 21 and the sealing material layer 22.

In the explanation above, an explanation was given on the assumption that the first notch part 14 is arranged in the film layer 7 of the sensor module 20 of Figure 3A, the second notch part 62 in the first weather resistant layer 21, and the third notch part 64 in the sealing material layer 22. However, similar to this, the first notch part 14 may be arranged in the film layer 7 of the sensor module 20 shown in Figure 3B, Figure 4A and Figure 4B, and in the sensor module 30 shown in Figure 5A, Figure 5B, Figure 6A and Figure 6B, the second notch part 62 in the first weather resistant layer 21 and the third notch part 64 may be provided in the sealing material layer 22 respectively.

### Modified Example 2

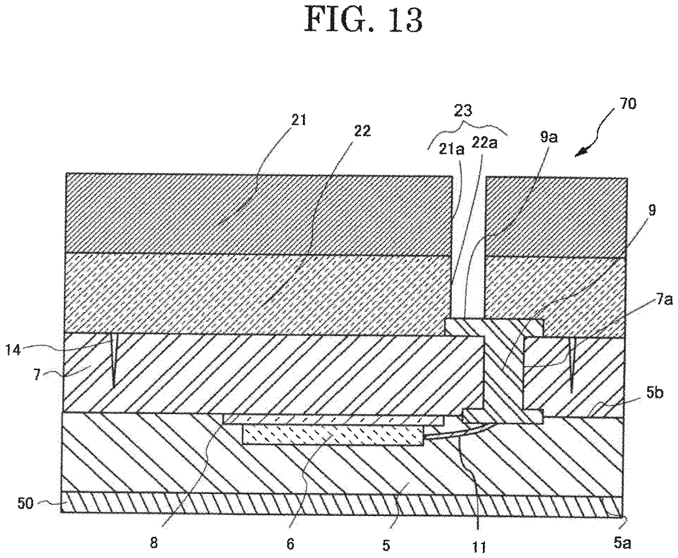

A sensor module 70 according to a modified example of the fifth embodiment is explained using Figure 13. Figure 13 is a cross-sectional view of a sensor module according to a second modified example of the fifth embodiment. The sensor module 70 is substantially the same as the sensor module 20 (see Figure 3A) of the second embodiment. Therefore, a detailed explanation of overlapping parts is omitted and only parts which are different are explained in detail.

A first notch part 14 is arranged in the film layer 7 of the sensor module 70. This point is the same as the sensor module 50 of the fifth embodiment. Therefore, a detailed explanation of the first notch part 14 is also omitted here. On the other hand, unlike the sensor module 60 according to the modified example 1, the first notch part is not arranged in the first weather resistant layer 21. In addition, the sealing material layer 22 is not arranged with a third notch part.

The same advantageous effect as in the modified example 1 is also obtained in the present modified example.

In the explanation above, an explanation was given on the assumption that the first notch part 14 is arranged in the film layer 7 of the sensor module 20 in Figure 3A. However, similar to this, the first notch part 14 may be respectively arranged in the film layer 7 of the sensor module 30 shown in Figure 3B, Figure 4A and Figure 4B, and the sensor module 30 shown in Figure 5A, Figure 5B, Figure 6A and Figure 6B.

### Modified Example 3

In the fifth embodiment and the modified examples described above, the first notch part 14, the second notch part 62 and the third notch part 64 are explained on the assumption that they are arranged continuously (For example, see Fig. 11). However, the first notch part 14, the second notch part 62 and the third notch part 64 may also be provided discontinuously similar to perforations. The same advantageous effect as in the fifth embodiment is also obtained in the present modified example.

### Sixth Embodiment

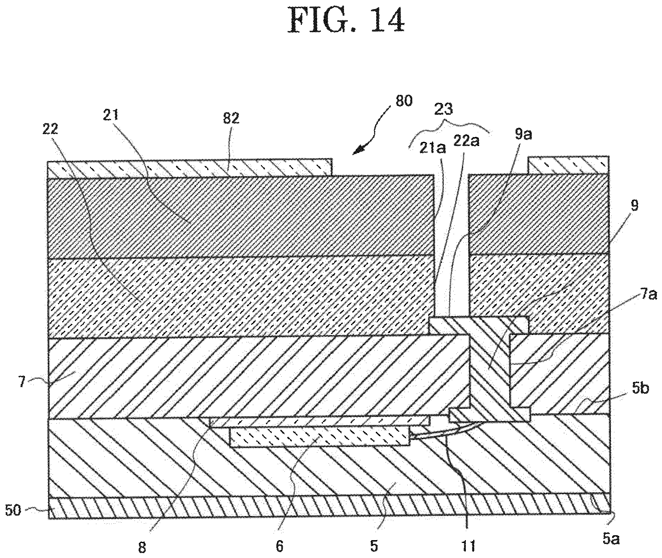

A sensor module 80 according to a sixth embodiment is explained using Figure 14. Figure 14 is a cross-sectional view of a sensor module according to a sixth embodiment. The sensor module 80 is substantially the same as the sensor module 20 (see Figure 3A) of the second embodiment. Therefore, a detailed explanation of overlapping parts is omitted and only parts which are different are explained in detail.

A magnet 82 is arranged on a side opposite to the side on which the sealing material layer 22 is arranged in the first weather resistant layer 21 of the sensor module 80. In the case where the peeling film 50 is peeled off and the elastic layer 5 is adhered to the structure 100, when the structure 100 is made of a material having a property which attracts the magnet 82 such as steel, the magnet 82 is arranged at a position where warpage occurs in the film layer 7, and thereby it is possible to suppress the occurrence of warping in the film layer 7. Furthermore, it is preferred that the magnet 82 has a volume of at least φ2 mm and a height of 1 mm or more in order to obtain a necessary suction force.

The same advantageous effects as those of the second embodiment are also obtained in the present embodiment. In addition, in the present embodiment, it is possible to suppress the occurrence of warping in the film layer 7.

### Modified Example

In the sixth embodiment described above, an explanation was given on the assumption that the magnet 82 is arranged on the side opposite to the side where the sealing material layer 22 of the first weather resistant layer 21 is arranged. However, the position of the magnet 82 is not limited to this position. The magnet 82 may also be arranged between the film layer 7 and the sealing material layer 22 or between the sealing material layer 22 and the first weather resistant layer 21. Even in these cases, the same advantageous effect as that of the sixth embodiment is obtained.

In the sixth embodiment and the modified example described above, an explanation was given on the assumption that the magnet 82 is arranged in the sensor module 20 of the second embodiment shown in Figure 3A. However, the magnet 82 is not limited to this position. The magnet 82 may also be arranged in at least one of between the film layer 7 and the sealing material layer 22 of the sensor module 20 shown in Figure 3B, Figure 4A and Figure4B, and the sensor module 30 shown in Figure 5A, Figure 5B, Figure 6A and Figure 6B, between the sealing material layer 22 and the first weather resistant layer 21 and on the side opposite to the side on which the sealing material layer 22 of the first weather resistant layer 21 is arranged.

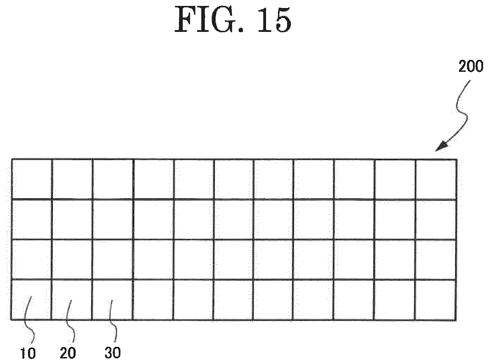

Furthermore, each of the sensor modules 10 to 80 according to the first embodiment to the sixth embodiment and each modified example may be a unit sheet having at least one sensor 6, or a sheet module 200 in which a plurality of unit sheets is joined together so as to be separable from each other (see Figure 15).

### Reference Signs List

10, 20, 30, 40, 50, 60, 70, 80: Sensor Module
5: Elastic Layer
6: Sensor
7: Film Layer
8: Adhesive Layer
9: Wiring
16: Second Weather Resistance Layer
21: First Weather Resistance Layer
22: Sealing Material Layer
31: Electronic Components

## Claims

1. A sensor module comprising:
a film layer including a first surface and a second surface on an opposite side to the first surface;
an elastic layer arranged on the first surface side of the film layer; and
a sensor arranged on the first surface side or the second surface side of the film layer and configured to detect a physical quantity related to the properties of a structure.

2. The sensor module according to claim 1, wherein the elastic layer is a tacky adhesive layer having tackiness and adhesiveness.

3. The sensor module according to claim 1, wherein the elastic layer includes a first tacky adhesion layer having tackiness and adhesiveness, and a second tacky adhesion layer arranged in the periphery of the first tacky adhesion layer and having higher tack strength than the first tacky adhesion layer, and the sensor is arranged between the film layer and the first tacky adhesion layer.

4. The sensor module according to claim 1, further comprising:
a first notch part arranged at a certain distance from an end part of the film layer on the second surface of the film layer.

5. The sensor module according to claim 4, wherein the first notch part is arranged from the second surface of the film layer further towards the first surface than a center of the film layer in a thickness direction of the film layer.

6. The sensor module according to claim 1, wherein the sensor includes any one of a distortion sensor for measuring distortions in the structure, an acceleration sensor, a heat sensor, a humidity sensor, and an acoustic emission sensor.

7. The sensor module according to claim 1, wherein the film layer and the elastic layer are transparent.

8. The sensor module according to claim 7, wherein a hole is formed in the thickness direction of the film layer, wiring of the sensor pass through the hole and terminal are formed so as to be exposed from the hole.

9. The sensor module according to claim 8, further comprising:
a first weather resistant layer having weather resistance properties arranged on the second surface side of the film layer and covering the film layer.

10. The sensor module according to claim 9, further comprising:
a sealing material layer arranged between the film layer and the first weather resistant layer.

11. The sensor module according to claim 10, wherein the first weather resistant layer further includes a second notch part passing through the first weather resistant layer in a thickness direction, the second notch part is arranged at a certain distance from an end part of the first weather resistant layer and connected to the first notch part.

12. The sensor module according to claim 11, wherein the sealing material layer further includes a third notch part passing through the sealing material layer in a thickness direction, the third notch part is arranged at a certain distance from an end part of the sealing material layer and connected the first notch part and the second notch part.

13. The sensor module according to claim 9, further comprising:
a magnet having a property to be attracted to the structure and arranged in at least in one of between the film layer and the sealing material layer, between the sealing material layer and the first weather resistant layer, and on an opposite side to a side where the film layer of the weather resistant layer is arranged.

14. The sensor module according to claim 11, wherein the sealing material layer is arranged with the wiring therein.

15. The sensor module according to claim 14, wherein a hole is formed in the first weather resistant layer and the sealing material layer in a thickness direction, and a terminal of the wiring is configured so as to be exposed from the hole.

16. The sensor module according to claim 11, wherein electronic components are arranged within the sealing material layer.

17. The sensor module according to claim 1, further comprising:
a second weather resistant layer having weather resistance properties arranged on a side surface of the film layer and the elastic layer and covering the film layer and the elastic layer.

18. The sensor module according to claim 16, wherein the electronic components include at least any one of an amplifier, an integrated circuit, a transmitter and a battery.

19. The sensor module according to claim 1, wherein the film layer includes any one of polyethylene-naphthalate and polyethylene-terephthalate.

20. The sensor module according to claim 2, wherein the elastic layer is a layer having light curing properties.

21. The sensor module according to claim 20, wherein the elastic layer includes am acrylic based resin or an epoxy-based resin.

22. The sensor module according to claim 10, wherein the first weather resistant layer and the sealing material layer are transparent.

23. The sensor module according to claim 17, wherein the second weather resistant layer is transparent.

24. A sheet module wherein each of the sensor modules according to claim 1 is a unit sheet having at least one of the sensors, and a plurality of the unit sensors are coupled and can be mutually detached.
